# EUROPEAN PATENT SPECIFICATION

(11) **EP 2 984 934 B1**
(45) Date of publication and mention of the grant of the patent: **26.06.2019**
(21) Application number: 15175848.9
(22) Date of filing: 08.07.2015
(51) Int. Cl.: A21C 11/16, A21C 11/18

(54) **FOOD MAKER**
LEBENSMITTELMACHER
MACHINE D'ALIMENTS

(30) Priority: 10.07.2014 US 201414327970
(43) Date of publication of application: 17.02.2016
(73) Proprietor: Dart Industries Inc., Orlando, Florida 32837 (US)
(72) Inventor: Backaert, Dimitri M.C.J., Orlando, FL Florida 32837 (US); Delgado Carmona, Sara L., Orlando, FL Florida 32837 (US); De Zutter, Bavo, Orlando, FL Florida 32837 (US)
(74) Representative: Barton, Matthew Thomas

(56) References cited:
- DE-A1- 2 000 417
- FR-A1- 2 576 188
- US-A- 4 863 433
- US-A1- 2004 187 706

## Description

### BACKGROUND OF THE INVENTION

The present invention relates in general to kitchen appliances, and more particularly to food makers. Even more particularly, the invention relates to food makers which are for receiving and extruding a food mixture. Even more particularly, the invention relates to food makers configured for receiving and extruding elongated food mixtures used for making pastas, croquettes, and deserts, such as churros.

Food makers for home and commercial use are known in the art. Food makers for receiving a food mixture and extruding the food mixture are known, such as commercial pasta makers.

An example of an existing croquette maker has a body for receiving an uncooked croquette mixture and croquette mixture extruding nozzles extending from the croquette mixture container in the body, as well as a hingedly attached food mixture pressing arm which is pressed down by the user for forcing the croquette mixture downwardly into the container and forcing the croquette mixture out of the nozzles in the form of elongated uncooked croquette mixture. After extrusion, the uncooked croquette mixture is cut by the user into desired lengths and then cooked or fried in a manner readily apparent to a person having ordinary skill in the art of cooking and, particularly, in the art of cooking croquettes.

Drawbacks of that known device include that it is difficult to clean, has a dedicated fixed croquette extrusion nozzle, and is limited to making one type of food in one dedicated predetermined size and shape.

That is merely one example of existing food makers and their drawbacks.

FR2576188 discloses a machine for producing moulded food articles from at least one pasty product contained in a reservoiur. The reservoir is placed above a rotating moulding plate and the machine is characterised in that it comprises an expulsion piston, which can move in the reservoir. The expulsion piston slides in a non-leaktight manner inside the said reservoir.

DE2000417 discloses a fried potato chip machine. A mixture of potato flour and water is passed to a plunger press that is fitted with a bottom spring supported plunger. The spring-loaded upper plunger releases the bottom plunger and the mixture is extruded through a ring of nozzles and cut to lengths by slicer wire. The chips drop to a fat bath with wire basket and are removed through a dispenser shaft.

US 2004187706 A1 discloses a food mixture extruder.

### SUMMARY OF THE INVENTION

An object of the present invention is to provide a food maker, and in particular a food maker for extruding a food mixture, which overcomes the drawbacks of the prior art.

A further object of the invention is to provide a food maker, such as a food mixture extruder, which is simple to use, environmentally friendly, compact, hygienic and easy to clean, such as by being free of components which are difficult to clean, and free of components which are not readily disconnected from others of the components for cleaning.

Another object of the invention is to provide a food maker, such as a food mixture extruder, which has readily exchangeable and interchangeable nozzles having different cross-sectional areas and configurations, so that the food maker can be used for making pastas of various shapes and sizes, cylindrical croquettes, rectangular (e.g. parallelepiped) foods, such as fish sticks, and desserts, such as churros, which have, for example, circular and star-shaped cross sections and in finished form have star-shaped cylinders and brick-shaped cylinders as the finished product.

A further object of the invention is to provide a food maker, such a food extruder, which provides an easy way to cut food mixture extruded from the extruder and in a consistent manner.

A still further object of the invention is to provide a minimal of left-over food mixture, such as dough.

Another object of the invention is to provide a food maker, such a food extruder, which has a slidable, food-receiving plate which can be provided underneath the food extruding nozzles so that the extruded food mixture contacts the plate when extruded and then advances the plate away from the food extruder. In that manner the extruded food is extruded as a consistent elongated cylinder of uncooked food for ease of cutting the extruded food into desired lengths and shapes for further preparation, such as cooking or frying.

It is another object of the invention to provide a slidable food receiving plate which likewise functions as a food cutting surface, having indicators, such as spaced apart ruled lines or markings on the food receiving surface thereof, so that the food may be readily cut into desired lengths.

These and other objects are achieved by a food maker providing improved features. The body of the food maker includes a container for holding a food mixture. The container has an open top and an open bottom. A plunger is provided to push down the food mixture in the container of the body. The plunger is provided with a closed bottom face for pushing down and forcing down the food mixture into the bottom of the container. The plunger according to the invention is configured as a hollow container itself with an open top face so that if, desired, the user can put parts of the food maker inside the plunger for ease of storage and compactness when not in use.

According to the invention, an extruder is provided at the open bottom end of the container for receiving the food mixture forced down into the bottom of the container by the plunger.

The extruder will have one or more extruder nozzles with outlets through which the food mixture is forced by the plunger. The outlets can be configured as different shapes depending on the user's preference, and the food being made. For example, when the user makes croquettes, the user may wish to have cylindrical croquettes of a certain size. The user would then chooses the extruder having outlets having the desired circular shape and size (i.e., diameter), and then the user would detachably attach the extruder at the open end of the container using easily released tabs provided on the extruder.

Then, after the croquette mixture is placed in the container, the user puts the plunger into the open top of the container and pushes down on the croquette mixture. The user continuous pushing until the croquette mixture is pressed out of the outlet having a circular cross section.

According to the invention, a slidable plate is provided below the extruder outlet so that the extruded croquette mixture is received on the plate. The plate is slidable so that the extruded croquette mixture pushes the plate forwardly away from the food maker body. In that manner, a consistent continual elongated cylinder of croquette mixture is received on the slidable plate.

Then, when the croquette mixture has been forced out of the outlet by the user, the user can then cut the elongated cylinder of croquette mixture into croquettes of the desired length. For convenience indicators, such spaced apart cutting lines, dividing lines, or other indicator elements, serve as a guide for where the user can cut the extruded croquette mixture so that the croquettes are all made in the same or different lengths according to the user's preference.

Further, a blocking plate or blocker may be provided which is received on the food maker next to the outlets of the extruder so that the extruder outlets are blocked. In that manner, when the user pushes down initially on the croquette mixture, the croquette mixture is pushed into the inlet of extruder and toward and up against the outlet of the extruder nozzle. Thus, the croquette mixture will be evenly pressed against the blocking plate.

Thanks to that blocking plate, the initial croquette mixture extruded from the outlet will have an even consistent shape so that the first length of croquette mixture extruded is as even as the middle and final lengths of the extruded croquette mixture. This results in a pleasing finished appearance to the croquettes which the user makes from the first croquette to the last croquette.

Still further, the blocking plate for the outlets can be configured so that the blocker plate is not only movable away from blocking the outlets, but may be completely removed from the food maker. In that manner, when the user takes the blocking plate away from the blocked outlets to allow the mixture to exit the outlets, the user can use the blocking plate as a food cutter or slicer to cut the extruded food mixture on the sliding plate into desired lengths.

Relative terms such as left, right, up, and down are for convenience only and are not intended to be limiting.

According to the present invention, there is provided a food maker comprising the features of claim 1.

Preferably, said extruder nozzle includes at least two nozzles.

Advantageously, said extruder nozzle has a rectangular opening.

Conveniently, said extruder nozzle has a circular opening.

According to the invention, said extruder is detachably attached to said body.

According to the invention, said plunger includes a cavity configured for receiving said extruder so that the extruder is storable in said cavity when detached from said body.

Conveniently, said extruder includes a plurality of extruders, and the plurality of the extruders is storable in said cavity when detached from said body.

Preferably, said closed bottom face of said plunger includes a surface configured for reducing sticking of a food mixture thereto.

Advantageously, said surface for reducing the sticking of a food mixture includes a dimple.

Conveniently, said surface for reducing the sticking of a food mixture includes a plurality of dimples.

Preferably, said container is elongated along a longitudinal axis;
said plunger is elongated along a longitudinal axis; and said plunger is slidably received in said container and is movable along said longitudinal axis of said container.

Advantageously, said plunger is slidably received in said container for movement toward and away from said open top and said open bottom of said container.

Conveniently, a slidable plate is provided under said extruder adjacent to said outlet, so that when said plunger is moved downwardly in said container for pushing a food mixture into said extruder inlet and out of said outlet, the extruded food is extruded onto the slidable plate and slides the slidable plate away from the extruder outlet so that extruded food may be continually extruded from the outlet and received on the slidable plate.

Preferably, a blocking plate is provided, said blocking plate being configured for being received adjacent said outlet of said extruder so that when a food mixture is provided in said container and said plunger is moved downwardly for forcing said food mixture into said extruder inlet, the blocking plate prevents the food mixture from being pushed out of said outlet.

Advantageously, said blocking plate is movable from said body for unblocking said outlet.

Conveniently, a plurality of spaced apart dividing lines are provided on said slidable plate, so that a user can cut extruded food received on said slidable plate using said dividing lines as a guide.

Preferably, said blocking plate is removable and is configured for use as a cutter for slicing extruded food received on said slidable plate.

Advantageously, a plurality of indicators is provided on said slidable plate, so that a user can cut extruded food received on said slidable plate using said indicators as a guide.

Conveniently, said plurality of indicators includes spaced apart lines.

Preferably, said closed bottom face of said plunger has a surface inside said cavity, and said surface inside said cavity is substantially smooth for ease of cleaning.

### DESCRIPTION OF THE DRAWINGS

The objects and features of the invention noted above are explained in more detail with reference to the drawings, in which like reference numerals denote like elements, and in which:
FIG. 1 is a top front perspective view of the food maker according to the present invention in its operative configuration;
FIG. 2 is a top rear perspective view of the food maker of Fig 1;
FIG. 3 is a top plan view of the Fig 1;
FIG. 4 is a bottom plan view of the embodiment of Fig 1;
FIG. 5 is a top front exploded perspective view of the food maker of Fig 1;
FIG. 6 is a top front perspective view of a further embodiment of an extruder nozzle according to the invention;
FIG. 7 is a top front perspective view of another preferred embodiment of an extruder nozzle according to the invention;
FIG. 8 is a top plan view of a blocking plate, which can function as a cutter, according to the invention.
FIG. 9 is a front view of the food maker according to the invention shown with the plunger in a raised position with the outlets blocked just prior to the plunger being pushed down by a user to make food product by extruding a food mixture through the extruder nozzle;
FIG. 10 is a cross-sectional side view along line 10-10 of Fig. 9 clearly showing a food mixture in a lower portion of the food maker;
FIG. 11 is a top plan view of a slidable plate for the food maker which receives the extruded food mixture on its upper surface; and
FIG. 12 is a top front perspective view of the food maker of Fig 1 showing a use position in which the plunger has been pushed downwardly by a user and a food mixture has been extruded out onto a slidable plate.

### DETAILED DESCRIPTION OF THE INVENTION

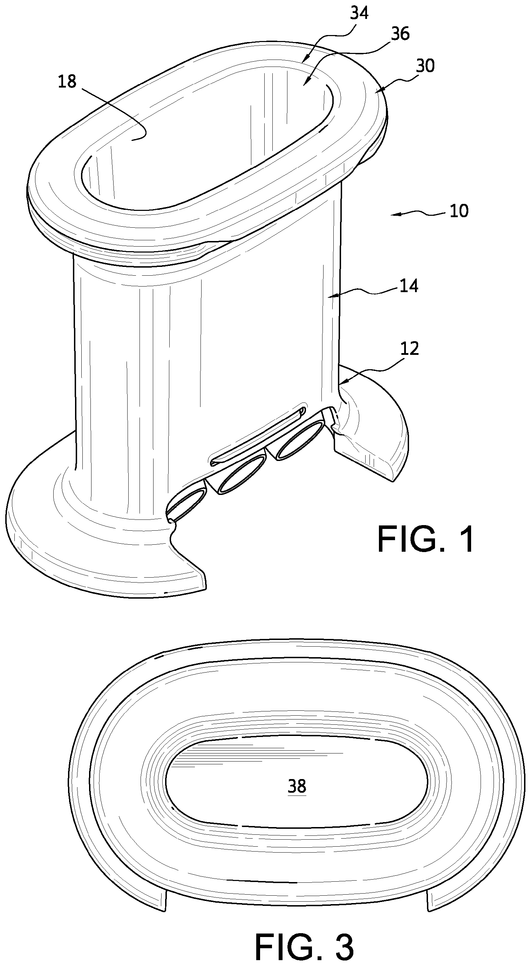

With reference to Fig. 1, a food maker according to the present invention is generally designated by reference numeral 10.

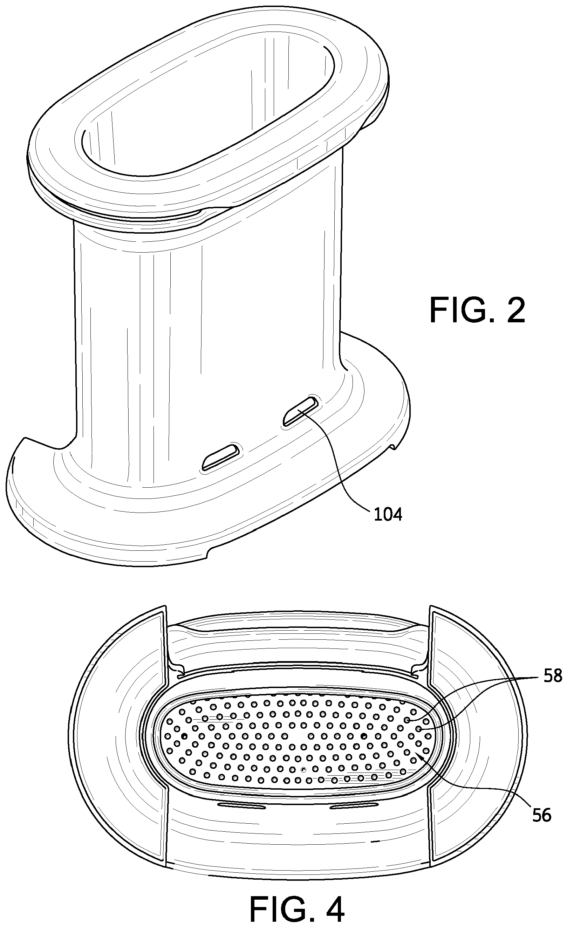

As shown in Figs. 1-12, Food maker 10 includes a body 12 including a container 14 for holding a food mixture, the container having an inner sidewall 18, an open top 22, and an open bottom 26.

A plunger 30 is received in the container, and plunger 30 has an open top face 34 and a closed inner bottom face 38 which define a cavity 36. Plunger 30 is movable within the container 14. Closed bottom face 38 of the plunger has a surface inside cavity 36, and the surface inside the cavity of plunger 30 may be substantially smooth for ease of cleaning.

The plunger has an outer side wall 42 configured for being received in the container 14 adjacent the inner sidewall 18, an upper rim 44, and the inner sidewall 18 and the outer sidewall 42 defining an opening 48 therebetween. The opening may be sufficiently large so that a portion of a food mixture can flow upwardly through opening 48 and past the inner and outer sidewalls as the plunger 30 is moved downwardly toward the open bottom 26 of container 14. In that manner a food mixture can be extruded easily and evenly by the user.

Plunger 36 has an outer bottom face 56 which includes a surface configured for reducing sticking of a food mixture thereto. That surface includes one or more dimples 58 to reduce sticking.

An extruder 70 has an extruder nozzle 74 and may be provided adjacent the open bottom 26 of the container 14. The extruder nozzle 70 includes an inlet 76 and an outlet 78, and the inlet 76 is configured for being provided adjacent the open bottom 26 of the container so that a food mixture enters the inlet 76 and exits the outlet 78 as the plunger 30 is moved downwardly toward the open bottom of the container 14. Extruder nozzle 74 may include at least two nozzles.

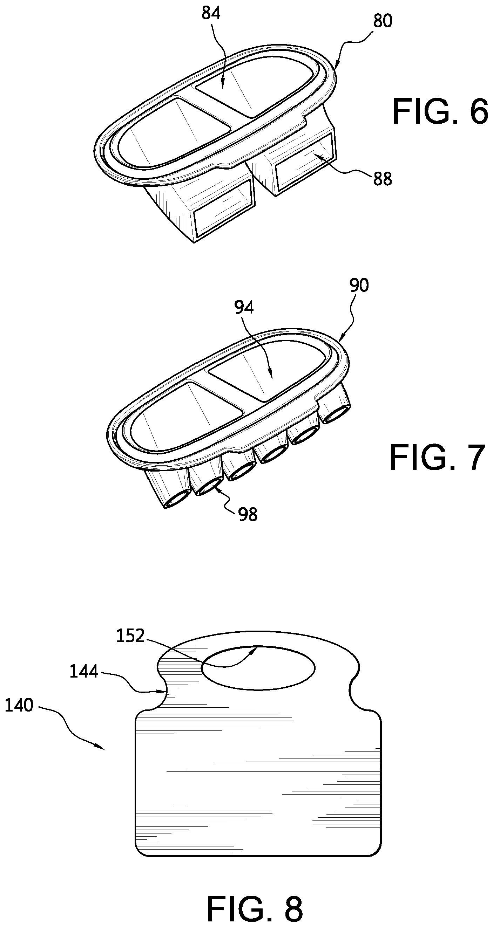

Fig. 6 shows a further embodiment of an extruder nozzle 80 having an inlet 84 and a rectangular outlet 88, inlet 84 may likewise be provided adjacent open bottom 26 of container 14 so that a food mixture enters the inlet 84 and exits outlet 88 as plunger 30 is moved downwardly.

Fig. 7 shows a still further embodiment of an extruder nozzle 90 having an inlet 94 and a circular outlet 98. Outlet 98 may include six outlets, as shown, and may have a different diameter than the diameter of outlets 78 of extruder nozzle 70.

According to the invention, each of extruder nozzles 70, 80, and 90 is detachably attached to the body 14, so that they may be removed for cleaning and readily exchanged for a different extruder nozzle, as will be readily appreciated.

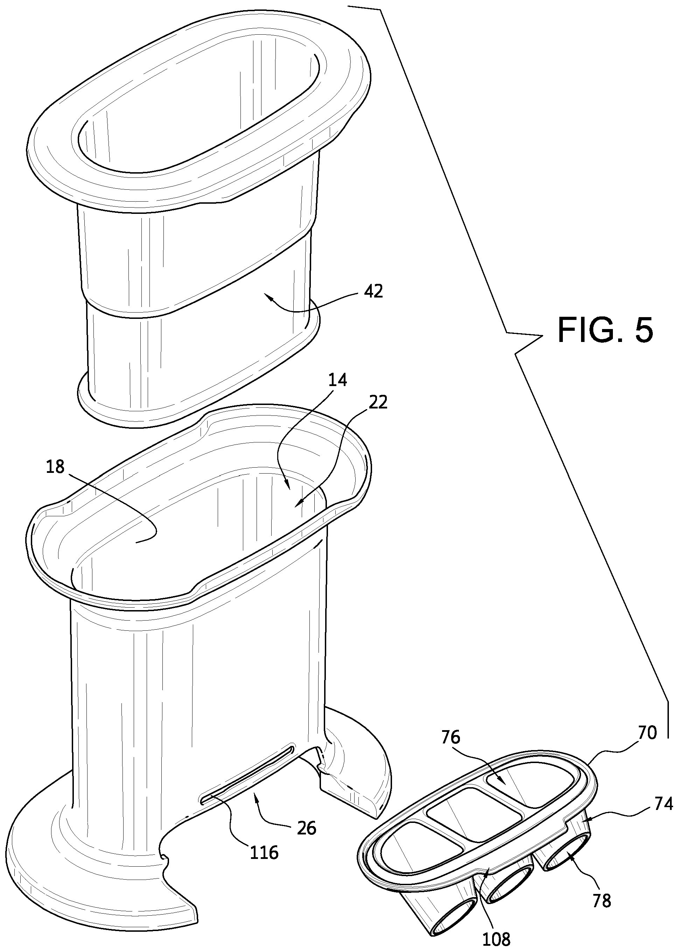

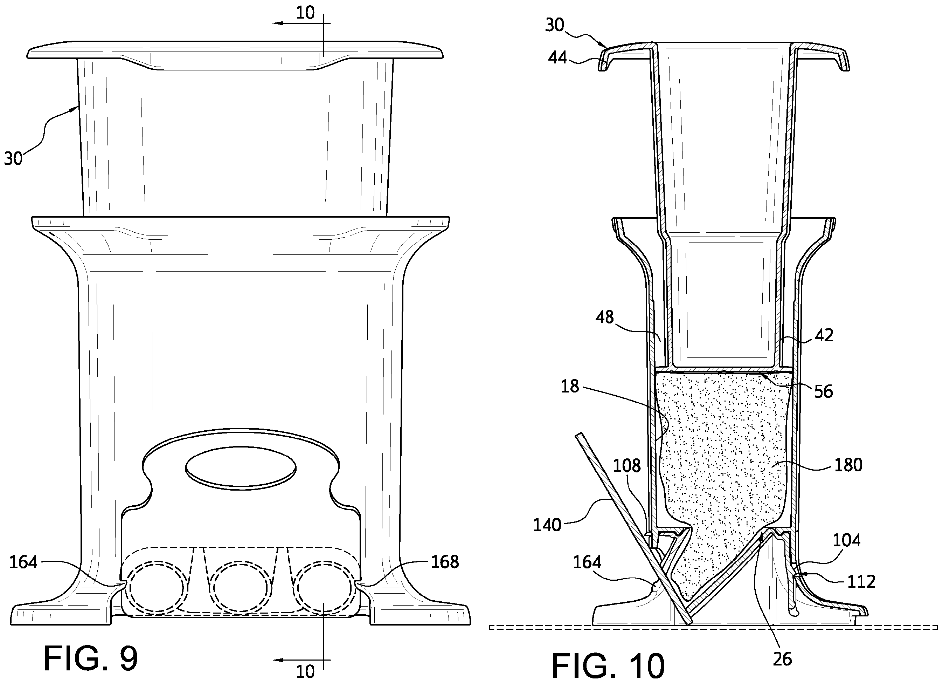

As shown in Figs. 5 and 10, for example, extruder nozzle 70 is provided with a tab or tabs 104, which may be rigid or flexible, and an extension 108, so that nozzle 70 may be readily replaced. A mating hole 112 in body 14 receives tab 104 and a further hole 116, which may be elongated, as shown in Figs. 1 and 5, for example, receives extension 108.

According to the invention, cavity 36 of plunger 30 is sized and configured for receiving one or more of extruders 70, 80, 90, so that the extruders are storable in the cavity when detached from the body.

Container 14 may be elongated along a longitudinal axis, and plunger 30 may likewise be elongated along a longitudinal axis. The plunger is slidably received in the container and may be movable along the longitudinal axis of the container, as will be readily appreciated by a person having ordinary skill in the art. The plunger may be slidably received for movement toward and away from the open top and the open bottom of the container 14.

Fig. 8 shows a blocker or blocking plate 140 having one or more indents 144 which can be grasped by a user for ease of manipulation. Likewise, a hole 152 for engaging a portion of a user's hand or fingers may be provided. Blocking plate 140 may be configured for being received and secured adjacent outlet 78 of extruder 70, as shown in Figs. 9 and 10. In that manner, when a food mixture 180 is provided in the container 14 and plunger 30 is moved downwardly for forcing the food mixture 180 into the extruder inlet 76, blocking plate 140 prevents the food mixture from being pushed out of the outlet 78.

Blocking plate 140 may be secured adjacent body 14 and outlets 78 by one or more extension 164 and 168 as shown in Figs. 9 and 10. In that manner blocking plate 140 is held against extruder nozzle 74 and prevents food mixture 180 from being pushed out of the outlet 78.

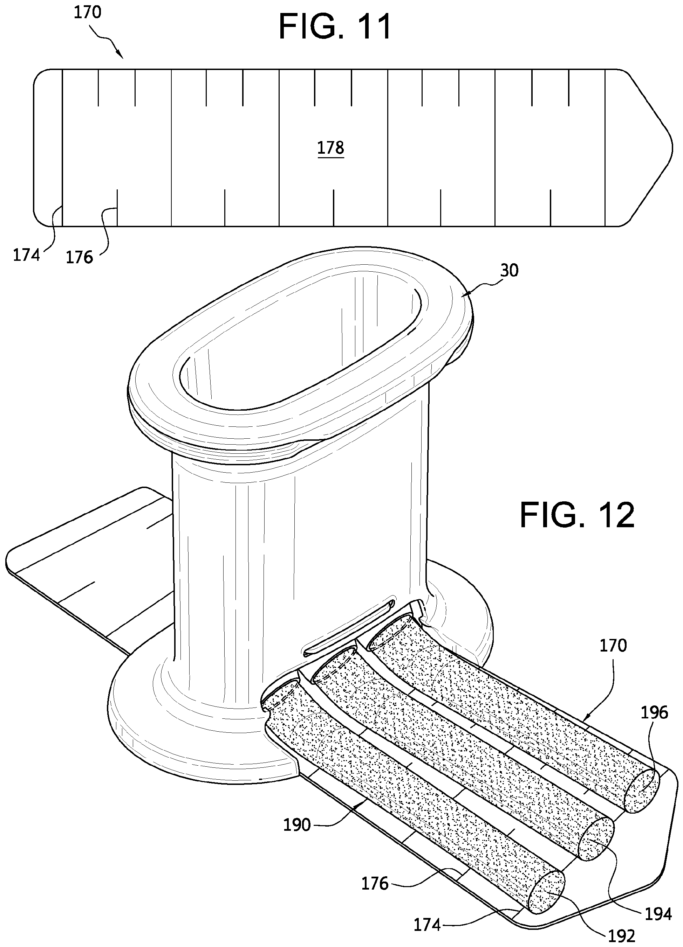

The blocking plate 140 is movable for unblocking the outlet 78 so that food mixture 180 may be extruded onto a slidable plate 170 as extruded food 190 as shown in Fig. 12.

Slidable plate 170 may have one or more indicators 174, 176, which may be lines, as shown, and which are described in detail below. Slidable plate 170 has an upper surface 178 and plate 170 may be sized and configured for being located under extruder 70 and adjacent to outlet 78, so that when plunger 30 is moved downwardly in container 14 for pushing food mixture 180 into the extruder inlet 76 and out of outlet 78, extruded food 190 is pushed onto the surface 178 of slidable plate 170. Extruded food 190 adheres to and, hence, slides the slidable plate away from the extruder outlet 78 so that extruded food may be continually extruded from the outlet and received on the slidable plate 170 without compression or distortion of the extruded food 190.

Indicators 174, 176 may be provided as a plurality of evenly spaced apart dividing lines, or provided at different spacings, so that a user can cut extruded food received on the slidable plate using the dividing lines as a guide.

The blocking plate 140 may be completely removable from the remainder of food maker 10 and be configured for use as a cutter for slicing extruded food received on the slidable plate. For example, to cut one or more of an extruded cylinders of food, such as first cylinder 192, second cylinder 194, and third cylinder 196 at one or more of indicators 174, 176 as best seen in Fig. 12; that is, using indicators 174, 176 as a guide.

From the foregoing, it will be seen that this invention is one well adapted to attain all ends and objects set forth above together with the other advantages which are inherent within its structure.

It will be understood that certain features and subcombinations are of utility and may be employed without reference to other features and subcombinations. This is contemplated by and is within the scope of the claims.

Since many possible embodiments may be made of the invention without departing from the scope thereof, it is to be understood that all matter herein set forth of shown in the accompanying drawings is to be interpreted as illustrative, and not in a limiting sense.

When used in this specification and claims, the terms "comprises" and "comprising" and variations thereof mean that the specified features, steps or integers are included. The terms are not to be interpreted to exclude the presence of other features, steps or components.

## Claims

1. A food maker (10) for extruding a food mixture (180), comprising:
a body (12) including a container (14) for holding a food mixture (180), the container (14) having an inner sidewall (18), an open top (22), and an open bottom (26);
a plunger (30) received in said container (14), the plunger (30) having a closed bottom face (38), and being movable within said container (14);
said plunger (30) having an outer sidewall (42) and a hollow interior, said outer sidewall configured for being received in said container (14) adjacent said inner sidewall (18), wherein said inner sidewall and said outer sidewall define an opening (48) therebetween, said opening (48) being sufficiently large that a portion of a food mixture (180) can flow upwardly through the opening (48) and past the inner and outer sidewalls (18, 42) as the plunger (30) is moved downwardly by a user toward said open bottom (26);
**characterized in that** the food maker (10) further comprises at least one extruder (70, 80, 90) detachably attached to said body (12), the at least one extruder (70, 80, 90) comprising an extruder nozzle (74) provided adjacent said open bottom (26) of said container (14), said extruder nozzle (74) having an inlet (76) and an outlet (78), and said inlet (76) being configured for being adjacent said open bottom (26) of said container (14) so that a food mixture enters said inlet (76) and exits said outlet (78) as the plunger (30) is moved downwardly toward said open bottom (26) of said container (14); and
**in that** said plunger (30) includes an open top face (34) and a cavity (36) configured for receiving said at least one extruder (70, 80, 90) so that the at least one extruder (70, 80, 90) is storable in said cavity (36) when detached from said body (12).

2. Food maker (10) as in claim 1, wherein:
said extruder nozzle (74) includes at least two nozzles.

3. Food maker (10) as in claim 1 or claim 2, wherein:
said extruder nozzle (74) has a rectangular opening (88).

4. Food maker as in claim 1 or claim 2, wherein:
said extruder nozzle (74) has a circular opening (98).

5. Food maker (10) as in any one of the preceding claims, wherein:
said closed bottom face (38) of said plunger (30) includes a surface configured for reducing sticking of a food mixture (180) thereto, wherein said surface for reducing the sticking of a food mixture (180) preferably includes a dimple (58), and more preferably wherein said surface for reducing the sticking of a food mixture (180) includes a plurality of dimples (58).

6. Food maker (10) as in any one of the preceding claims, wherein:
said container (14) is elongated along a longitudinal axis;
said plunger (30) is elongated along a longitudinal axis; and
said plunger (30) is slidably received in said container (14) and is movable along said longitudinal axis of said container (14).

7. Food maker (10) as in any one of claims 1-5, wherein:
said plunger (30) is slidably received in said container (14) for movement toward and away from said open top (22) and said open bottom (26) of said container (14).

8. Food maker (10) as in any one of the preceding claims, wherein:
a slidable plate (170) is provided under said extruder (70) adjacent to said outlet (78), so that when said plunger (30) is moved downwardly in said container (14) for pushing a food mixture (180) into said extruder (70) inlet (76) and out of said outlet (78), the extruded food is extruded onto the slidable plate (170), wherein the slidable plate (170) is slidable away from the extruder (70) outlet (78) so that extruded food may be continually extruded from the outlet (78) and received on the slidable plate (170).

9. Food maker (10) as in any one of the preceding claims, wherein:
a blocking plate (140) is provided, said blocking plate (140) being configured for being received adjacent said outlet (78) of said extruder (70) so that when a food mixture (180) is provided in said container (14) and said plunger (30) is moved downwardly for forcing said food mixture (180) into said extruder inlet (76), the blocking plate (140) prevents the food mixture (180) from being pushed out of said outlet (78), wherein said blocking plate is preferably movable from said body (12) for unblocking said outlet (78).

10. Food maker (10) as in claim 8 or claim 9, wherein:
a plurality of spaced apart dividing lines are provided on said slidable plate (170), so that the user can cut extruded food received on said slidable plate (170) using said dividing lines as a guide.

11. Food maker (10) as in claim 9 or claim 10, wherein:
said blocking plate (140) is removable and is configured for use as a cutter for slicing extruded food received on said slidable plate (170).

12. Food maker (10) as in any one of claims 8-11, wherein:
a plurality of indicators (174, 176) is provided on said slidable plate (170), so that a user can cut extruded food received on said slidable plate (170) using said indicators (174, 176) as a guide.

13. Food maker (10) as in claim 12, wherein:
said plurality of indicators (174, 176) includes spaced apart lines.

14. Food maker (10) as in any one of the preceding claims, wherein:
said closed bottom face (38) of said plunger (30) has a surface inside said cavity (36), and said surface inside said cavity (36) is substantially smooth for ease of cleaning.

## Patentansprüche

1. Küchenmaschine (10) zum Extrudieren einer Lebensmittelmischung (180), umfassend:
einen Körper (12), der einen Behälter (14) zum Enthalten einer Lebensmittelmischung (180) umfasst, wobei der Behälter (14) eine innere Seitenwand (18), ein offenes Oberteil (22) und ein offenes Unterteil (26) aufweist;
einen Stößel (30), der in dem Behälter (14) aufgenommen ist, wobei der Stößel (30) eine geschlossene Unterseite (38) aufweist und innerhalb des Behälters (14) bewegbar ist;
wobei der Stößel (30) eine äußere Seitenwand (42) und einen hohlen Innenraum aufweist, wobei die äußere Seitenwand konfiguriert ist, um in dem Behälter (14) neben der inneren Seitenwand (18) aufgenommen zu werden, wobei die innere Seitenwand und die äußere Seitenwand eine Öffnung (48) dazwischen definieren, wobei die Öffnung (48) groß genug ist, damit ein Teil einer Lebensmittelmischung (180) durch die Öffnung (48) hindurch nach oben und an den inneren und äußeren Seitenwänden (18, 42) vorbei fließen kann, wenn der Stößel (30) durch einen Benutzer nach unten in Richtung auf das offene Unterteil (26) bewegt wird;
**dadurch gekennzeichnet, dass** die Küchenmaschine (10) ferner mindestens eine Strangpresse (70, 80, 90) umfasst, die abnehmbar an dem Körper (12) angebracht ist, wobei die mindestens eine Strangpresse (70, 80, 90) eine Strangpressendüse (74) umfasst, die neben dem offenen Unterteil (26) des Behälters (14) bereitgestellt wird, wobei die Strangpressendüse (74) einen Einlass (76) und einen Auslass (78) aufweist, und der Einlass (76) konfiguriert ist, um sich neben dem offenen Unterteil (26) des Behälters (14) zu befinden, so dass eine Lebensmittelmischung in den Einlass (76) eintritt und aus dem Auslass (78) austritt, wenn der Stößel (30) nach unten in Richtung auf das offene Unterteil (26) des Behälters (14) bewegt wird; und
dass der Stößel (30) eine offene Oberseite (34) und einen Hohlraum (36) umfasst, der konfiguriert ist, um die mindestens eine Strangpresse (70, 80, 90) aufzunehmen, so dass die mindestens eine Strangpresse (70, 80, 90) in dem Hohlraum (36) gelagert werden kann, wenn sie von dem Körper (12) abgenommen ist.

2. Küchenmaschine (10) nach Anspruch 1, wobei:
die Strangpressendüse (74) mindestens zwei Düsen umfasst.

3. Küchenmaschine (10) nach Anspruch 1 oder 2, wobei:
die Strangpressendüse (74) eine rechteckige Öffnung (88) aufweist.

4. Küchenmaschine nach Anspruch 1 oder 2, wobei:
die Strangpressendüse (74) eine kreisförmige Öffnung (98) aufweist.

5. Küchenmaschine (10) nach einem der vorhergehenden Ansprüche, wobei:
die geschlossene Unterseite (38) des Stößels (30) eine Oberfläche umfasst, die konfiguriert ist, um ein Festkleben einer Lebensmittelmischung (180) daran zu reduzieren, wobei die Oberfläche zum Reduzieren des Festklebens einer Lebensmittelmischung (180) bevorzugt eine Vertiefung (58) umfasst, und wobei die Oberfläche zum Reduzieren des Festklebens einer Lebensmittelmischung (180) weiter bevorzugt eine Vielzahl von Vertiefungen (58) umfasst.

6. Küchenmaschine (10) nach einem der vorhergehenden Ansprüche, wobei:
der Behälter (14) entlang einer Längsachse länglich ist;
der Stößel (30) entlang einer Längsachse länglich ist; und
der Stößel (30) in dem Behälter (14) verschiebbar aufgenommen ist und entlang der Längsachse des Behälters (14) bewegbar ist.

7. Küchenmaschine (10) nach einem der Ansprüche 1 bis 5, wobei:
der Stößel (30) in dem Behälter (14) für eine Bewegung zu und von dem offenen Oberteil (22) und dem offenen Unterteil (26) des Behälters (14) verschiebbar aufgenommen ist.

8. Küchenmaschine (10) nach einem der vorhergehenden Ansprüche, wobei:
eine verschiebbare Platte (170) unter der Strangpresse (70) neben dem Auslass (78) bereitgestellt wird, so dass, wenn der Stößel (30) in dem Behälter (14) nach unten bewegt wird, um eine Lebensmittelmischung (180) in den Einlass (76) der Strangpresse (70) hinein und aus dem Auslass (78) heraus zu drücken, die extrudierten Lebensmittel auf die verschiebbare Platte (170) extrudiert werden, wobei die verschiebbare Platte (170) von dem Auslass (78) der Strangpresse (70) weg verschiebbar ist, so dass die extrudierten Lebensmittel ständig aus dem Auslass (78) extrudiert und auf der verschiebbaren Platte (170) aufgenommen werden können.

9. Küchenmaschine (10) nach einem der vorhergehenden Ansprüche, wobei:
eine Blockierplatte (140) bereitgestellt wird, wobei die Blockierplatte (140) konfiguriert ist, um neben dem Auslass (78) der Strangpresse (70) aufgenommen zu werden, so dass, wenn eine Lebensmittelmischung (180) in dem Behälter (14) bereitgestellt wird und der Stößel (30) nach unten bewegt wird, um die Lebensmittelmischung (180) in den Strangpressenauslass (76) zu zwängen, die Blockierplatte (140) verhindert, dass die Lebensmittelmischung (180) aus dem Auslass (78) heraus gedrückt wird, wobei die Blockierplatte bevorzugt von dem Körper (12) zum Freigeben des Auslasses (78) bewegbar ist.

10. Küchenmaschine (10) nach Anspruch 8 oder 9, wobei:
eine Vielzahl von beabstandeten Teilstrichen auf der verschiebbaren Platte (170) bereitgestellt wird, so dass der Benutzer die extrudierten Lebensmittel, die auf der verschiebbaren Platte (170) aufgenommen werden, unter Verwendung der Teilstriche als Führung zuschneiden kann.

11. Küchenmaschine (10) nach Anspruch 9 oder 10, wobei:
die Blockierplatte (140) abnehmbar ist und zur Verwendung als Schneidvorrichtung zum Aufschneiden von extrudierten Lebensmitteln, die auf der verschiebbaren Platte (170) aufgenommen werden, konfiguriert ist.

12. Küchenmaschine (10) nach einem der Ansprüche 8 bis 11, wobei:
eine Vielzahl von Indikatoren (174, 176) auf der verschiebbaren Platte (170) bereitgestellt wird, so dass ein Benutzer extrudierte Lebensmittel, die auf der verschiebbaren Platte (170) aufgenommen werden, unter Verwendung der Indikatoren (174, 176) als Führung zuschneiden kann.

13. Küchenmaschine (10) nach Anspruch 12, wobei:
die Vielzahl von Indikatoren (174, 176) beabstandete Striche umfasst.

14. Küchenmaschine (10) nach einem der vorhergehenden Ansprüche, wobei:
die geschlossene Unterseite (38) des Stößels (30) eine Oberfläche im Innern des Hohlraums (36) aufweist, und die Oberfläche im Innern des Hohlraums (36) zur einfacheren Reinigung im Wesentlichen glatt ist.

## Revendications

1. Machine d'aliments (10) pour extruder un mélange d'aliments (180), comprenant :
un corps (12) comprenant un récipient (14) pour contenir un mélange d'aliments (180), le récipient (14) ayant une paroi latérale interne (18), une partie supérieure ouverte (22) et une partie inférieure ouverte (26) ;
un piston (30) reçu dans ledit récipient (14), le piston (30) ayant une face inférieure fermée (38) et étant mobile à l'intérieur dudit récipient (14) ;
ledit piston (30) ayant une paroi latérale externe (42) et un intérieur creux, ladite paroi latérale externe étant configurée pour être reçue dans ledit récipient (14) de manière adjacente à ladite paroi latérale interne (18), ladite paroi latérale interne et ladite paroi latérale externe définissant une ouverture (48) entre elles, ladite ouverture (48) étant suffisamment grande pour qu'une partie d'un mélange d'aliments (180) puisse s'écouler vers le haut à travers l'ouverture (48) et au-delà des parois latérales interne et externe (18, 42) à mesure que le piston (30) est déplacé vers le bas par un utilisateur vers ladite partie inférieure ouverte (26) ;
**caractérisé par le fait que** la machine d'aliments (10) comprend en outre au moins une extrudeuse (70, 80, 90) fixée audit corps (12) de manière détachable, l'au moins une extrudeuse (70, 80, 90) comprenant une buse d'extrudeuse (74) disposée adjacente à ladite partie inférieure ouverte (26) dudit récipient (14), ladite buse d'extrudeuse (74) ayant une entrée (76) et une sortie (78), et ladite entrée (76) étant configurée pour être adjacente à ladite partie inférieure ouverte (26) dudit récipient (14) de telle sorte qu'un mélange d'aliments entre dans ladite entrée (76) et sort de ladite sortie (78) à mesure que le piston (30) est déplacé vers le bas vers ladite partie inférieure ouverte (26) dudit récipient (14) ; et
**par le fait que** ledit piston (30) comprend une face supérieure ouverte (34) et une cavité (36) configurée pour recevoir ladite au moins une extrudeuse (70, 80, 90) de telle sorte que l'au moins une extrudeuse (70, 80, 90) est apte à être rangée dans ladite cavité (36) lorsqu'elle est détachée dudit corps (12).

2. Machine d'aliments (10) selon la revendication 1, dans laquelle :
ladite buse d'extrudeuse (74) comprend au moins deux buses.

3. Machine d'aliments (10) selon la revendication 1 ou la revendication 2, dans laquelle :
ladite buse d'extrudeuse (74) a une ouverture rectangulaire (88).

4. Machine d'aliments (10) selon la revendication 1 ou la revendication 2, dans laquelle :
ladite buse d'extrudeuse (74) a une ouverture circulaire (98).

5. Machine d'aliments (10) selon l'une quelconque des revendications précédentes, dans laquelle :
ladite face inférieure fermée (38) dudit piston (30) comprend une surface configurée pour réduire l'adhésion d'un mélange d'aliments (180) à celle-ci, ladite surface pour réduire l'adhésion d'un mélange d'aliments (180) comprenant de préférence une alvéole (58) et, de façon davantage préférée, ladite surface pour réduire l'adhésion d'un mélange d'aliments (180) comprenant une pluralité d'alvéoles (58).

6. Machine d'aliments (10) selon l'une quelconque des revendications précédentes, dans laquelle :
ledit récipient (14) est allongé le long d'un axe longitudinal ;
ledit piston (30) est allongé le long d'un axe longitudinal ; et
ledit piston (30) est reçu de manière coulissante dans ledit récipient (14) et est mobile le long dudit axe longitudinal dudit récipient (14).

7. Machine d'aliments (10) selon l'une quelconque des revendications 1 à 5, dans laquelle :
ledit piston (30) est reçu de manière coulissante dans ledit récipient (14) pour un mouvement vers et à l'opposé de ladite partie supérieure ouverte (22) et de ladite partie inférieure ouverte (26) dudit récipient (14).

8. Machine d'aliments (10) selon l'une quelconque des revendications précédentes, dans laquelle :
une plaque coulissante (170) est prévue sous ladite extrudeuse (70) de manière adjacente à ladite sortie (78) de telle sorte que, lorsque ledit piston (30) est déplacé vers le bas dans ledit récipient (14) pour pousser un mélange d'aliments (180) dans ladite entrée (76) de l'extrudeuse (70) et hors de ladite sortie (78), l'aliment extrudé est extrudé sur la plaque coulissante (170), la plaque coulissante (170) étant apte à coulisser à l'écart de la sortie (78) de l'extrudeuse (70) de telle sorte que de l'aliment extrudé peut être extrudé de manière continue à partir de la sortie (78) et être reçu sur la plaque coulissante (170).

9. Machine d'aliments (10) selon l'une quelconque des revendications précédentes, dans laquelle :
une plaque de blocage (140) est prévue, ladite plaque de blocage (140) étant configurée pour être reçue de manière adjacente à ladite sortie (78) de ladite extrudeuse (70) de telle sorte que, lorsqu'un mélange d'aliments (180) est placé dans ledit récipient (14) et que ledit piston (30) est déplacé vers le bas pour forcer ledit mélange d'aliments (180) dans ladite entrée d'extrudeuse (76), la plaque de blocage (140) empêche le mélange d'aliments (180) d'être poussé hors de ladite sortie (78), ladite plaque de blocage étant de préférence mobile à partir dudit corps (12) pour débloquer ladite sortie (78).

10. Machine d'aliments (10) selon la revendication 8 ou la revendication 9, dans laquelle :
une pluralité de lignes de séparation espacées sont prévues sur ladite plaque coulissante (170), de telle sorte que l'utilisateur peut couper l'aliment extrudé reçu sur ladite plaque coulissante (170) en utilisant lesdites lignes de séparation comme guide.

11. Machine d'aliments (10) selon la revendication 9 ou la revendication 10, dans laquelle :
ladite plaque de blocage (140) est amovible et est configurée pour être utilisée comme élément de coupe pour trancher l'aliment extrudé reçu sur ladite plaque coulissante (170).

12. Machine d'aliments (10) selon l'une quelconque des revendications 8 à 11, dans laquelle :
une pluralité d'indicateurs (174, 176) sont prévus sur ladite plaque coulissante (170), de telle sorte qu'un utilisateur peut couper l'aliment extrudé reçu sur ladite plaque coulissante (170) en utilisant lesdits indicateurs (174, 176) comme guide.

13. Machine d'aliments (10) selon la revendication 12, dans laquelle :
ladite pluralité d'indicateurs (174, 176) comprennent des lignes espacées.

14. Machine d'aliments (10) selon l'une quelconque des revendications précédentes, dans laquelle :
ladite face inférieure fermée (38) dudit piston (30) a une surface à l'intérieur de ladite cavité (36), et ladite surface à l'intérieur de ladite cavité (36) est sensiblement lisse pour faciliter le nettoyage.
